# EUROPEAN PATENT APPLICATION

(11) **EP 4 502 462 A1**
(43) Date of publication of application: **05.02.2025**
(21) Application number: 24191834.1
(22) Date of filing: 30.07.2024
(51) Int. Cl.: F21V 5/04, F21S 41/29, F21S 41/63, F21V 14/06, F21V 17/02, G02B 7/02, G03B 21/14

(54) **PROJECTOR OF A LIGHT BEAM**

(30) Priority: 03.08.2023 IT 202300016590
(71) Applicant: Music & Lights S.r.l., 04026 Minturno Latina (IT)
(72) Inventor: DI FUSCO, Matteo Luciano, 04022 FONDI (LATINA) (IT); GABRIELLI, Andrea, 47924 RIMINI (IT)
(74) Representative: Milli, Simone

(57) **Abstract**

Described is a projector of a light beam comprising a projector body (1) having a first end (1a) and a second end (1b) defining a longitudinal axis of extension; a light source (2), positioned inside the projector body (1) close to the first end (1a) and configured to emit a light beam along a direction (F) and in a sense of emission from the first end (1a) to the second end (1b) of the projector body (1); a front covering glass (3) for the outlet of the light beam positioned at the second end (1b) of the projector body (1); a plurality of flanges (4a-4d) associated with the annular edge (5) of the second end (1b) of the projector body (1); each flange (4a-4d) protrudes parallel with the direction (F) of emission of the light beam; each flange (4a-4d) is provided with at least one curved channel (6) formed on its inner surface; an annular body (7) for housing a first lens (8) configured for modifying the projection of the light beam; the annular body (7) has an edge (7a) configured for housing, in use, inside the relative channel (6) present on each flange (4a-4d); means (9) for quick, reversible locking of the annular body (7) on the flanges (4a-4d) located on at least one of the flanges (4a-4d) and configured to stably position the first lens (7) close to front glass (3) in a position centred relative to the direction (F) of the light beam.

## Description

This invention relates to a projector of a light beam.

One of the various types of projectors present on the market is those which are able to generate light beams directed for outdoor use.

These projectors must have a high degree of protection against external agents (the so-called IP grade).

In their more general form, these projectors comprise a containment and support frame (or housing), having a main extension along the axis of emission of the light beam and containing inside it at least the following components: a controlled source for projection of a light beam (for example LED type sources) at a first end of the frame, and a single glass lens for the output of the light beam associated with the other end of the frame.

The projector body made in this way must obviously have a seal against external agents (sunlight, water, etc.).

In addition, this type of the projector offers the possibility of modifying the opening beam of the projection using at least one additional lens positioned inside the frame and interposed between the light source and the end glass.

However, this structure of the projector has several drawbacks.

The addition of a lens or the replacement of the one already mounted inside the frame comprises a relatively long and laborious assembly of the lenses, since it requires a variety of equipment and tools in order to be able to remove the front end glass, make a correct assembly of the lens(es) inside and refit the front glass.

Moreover, these tools are not always available during the assembly and the positioning of the projectors in temporary events or installations.

According to a known alternative, the additional lens, provided with an annular supporting body (holder), may be mounted on the outer side of the frame of the projector at a certain distance of the front glass through an independent support applied, at the moment, on the frame where they remain fixed.

This feature, however, gives it a certain amount of space or distance between the front glass and the optional lens.

This distance between optional lens and glass creates a problem in the optical system and is usually the cause of: a different angle of opening of the light beam from that desired, a loss of efficiency and possible unwanted escape of lateral light ("spill light").

Another problem encountered with this system is due to the fact that the optional or additional lenses are made of plastic material and, therefore, once installed outside the projector, they have accelerated deterioration if exposed to moist environments or if exposed to direct sunlight. The lenses, therefore, have a rapid ageing which generates an irreversible transformation of the lens with a consequent loss of efficiency as well as a mechanical weakening with relative need for fast replacement and disposal of the old lens.

The aim of this invention is to provide a projector of a light beam which overcomes the drawbacks of the prior art described above.

In particular, the aim of this invention is to provide a projector of a light beam which can be accessorised quickly and precisely with additional lenses without the need for particular equipment.

A further aim of the invention is to provide a projector of a light beam which is able to have a compact structure and with the possibility of rapid removal and/or replacement of the additional lens without the need for special equipment or tools.

Said aims are fully achieved by a projector of a light beam according to the invention as characterised in the appended claims.

The main features of the invention will become more apparent from the following detailed description of a preferred, non-limiting embodiment, illustrated purely by way of example in the accompanying drawings, in which:
- Figure 1 is a perspective view of an assembled configuration of a projector of a light beam according to this invention;
- Figure 2 is a perspective exploded view of the projector of a light beam of Figure 1;
- Figures 3 and 4 are perspective views of the front part of the projector in two different operating configurations of assembly of an outer lens;
- Figure 5 is a perspective cross-section view of the front part of the projector of Figure 4;
- Figure 6 is a cross section of the front part of the projector.

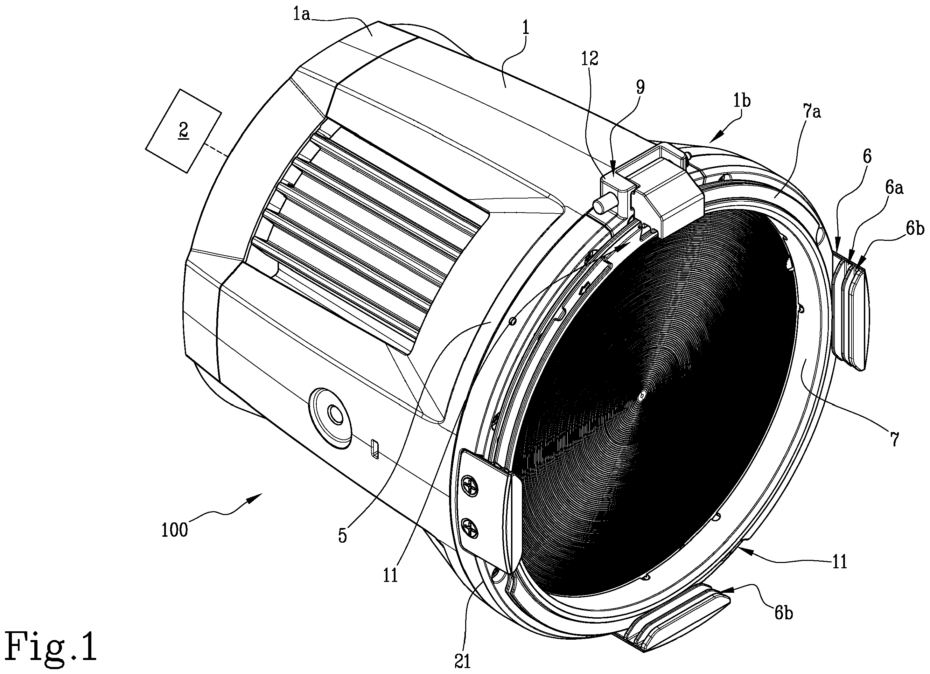

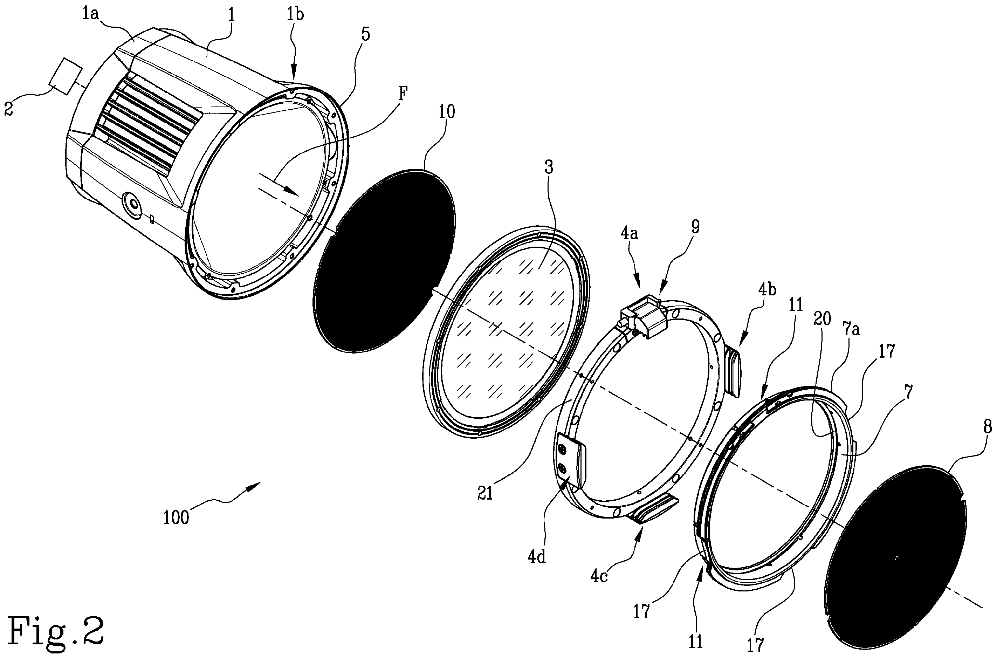

With reference to the accompanying drawings, and with particular reference to Figures 1 and 2, the projector of a light beam according to the invention, labelled 100 in its entirety, may be, but without limiting the scope of the invention, used for lighting outdoor events.

As illustrated, the projector 100 comprises a projector body 1 (box-shaped body) having a first end and a second end to define a longitudinal axis of extension.

The projector 100 also comprises a light source 2 (for example, a LED unit indicated with a block in Figures 1 and 2), positioned inside the projector body 1 close to the first end and configured for emitting a light beam along a direction F of emission and in a sense of emission extending from the first end to the second end of the projector body 1.

The projector 100 also comprises a front covering glass 3 for the outlet of the light beam positioned at the second end 1b of the projector body 1.

As illustrated, the projector 100 comprises a plurality of flanges 4a-4d associated with the annular edge 5 of the second end 1b of the projector body 1. At least one of these flanges, labelled 4a, is movable.

Each flange 4a-4d protrudes parallel to the direction F of emission of the light beam.

Each flange 4a-4d is also equipped with at least one curved channel 6 formed on its inner surface.

The flanges 4a-4b are associated with a rigid ring 21 which can be coupled with the annular edge 5 of the projector body 1.

The projector 100 also comprises an annular body 7 for housing a first lens 8 configured for modifying the projection of the light beam.

The annular body 7 has an edge 7a configured for housing, in use, inside the relative channel 6 present on each flange 4a-4d.

The projector 100 also comprises means 9 for quick, reversible locking of the annular body 7 on the flanges 4a-4d positioned on at least the movable flange 4a and configured for stably positioning the first lens 7 close to the front glass 3 in a position centred relative to the direction F of the light beam.

In other words, the projector 100 has the possibility of adding and removing an additional lens outside the projector in a fast and simple manner and with the certainty of correct centring of the lens relative to the direction of the light beam.

All of this without affecting the structure, the dimensions of the projector and the operating capacity of the projector.

As illustrated in Figures 1 and 2, the projector 100 may comprise a second lens 10 configured for modifying the projection of the light beam housed inside the projector body 1, between the light source 2 and the front glass 3 and positioned in a position centred relative to the direction F of the light beam.

This allows a greater operational flexibility of the projector 100.

It should be noted that, for example, there are four flanges 4a-4d present on the edge 5 of the projector 100 arranged at a right angle from each other.

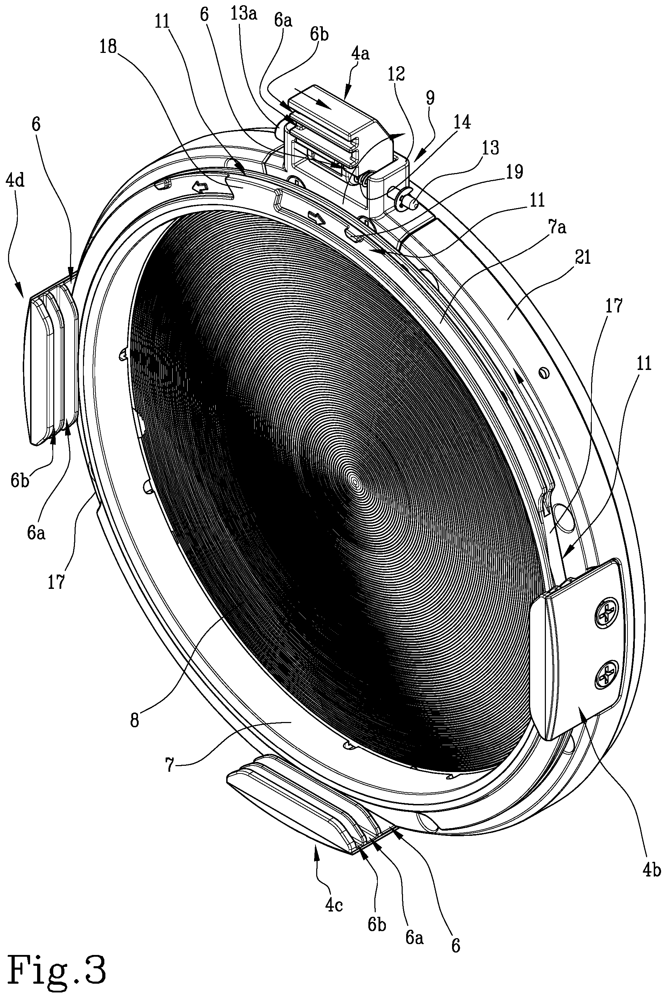

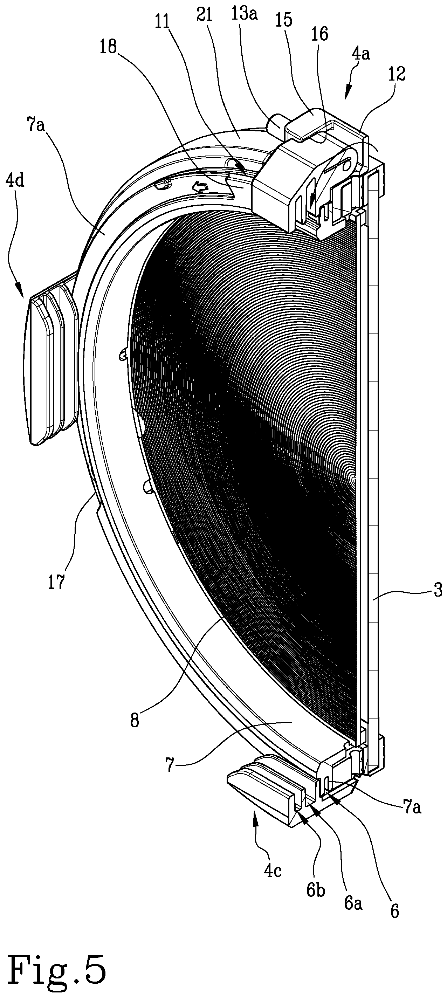

As also illustrated in Figures 3 to 6, the edge 7a of the annular body 7 is equipped with means 11 for relative positioning with the flanges 4a-4d and configured for forming a constrained space for at least the movable flange labelled 4a, by a rotation of the annular body 7 after a free positioning, towards the front glass 3, of the annular edge 7a to the channel 6 of each flange 4a-4d (as described below).

It should be noted that the quick, reversible locking means 9 comprise a box-shaped support 12 associated with the frame 1 of the projector and having a pin 13 partly housed inside the support 12 on which is articulated the movable flange 4a in such a way as to rotate between:
- a first lowered operating position for locking the flange 4a (Figures 1, 2 and from 4 to 6) on the annular body 7, wherein the movable flange 4a is positioned parallel to the direction F of the light beam, and
- a second raised position of the flange 4a (Figure 3) for the free passage of the annular body 7, wherein the movable flange 4a is positioned transversally to the direction F of the light beam.

In light of this, the quick, reversible locking means 9 comprise an elastic element 14 (helical spring) fitted on the pin 13, retained between an inner wall of the support 12 and a (lateral) surface of the movable flange 4a, and configured to allow the movable flange 4a to be kept in the first lowered operating position or in the second raised operating position.

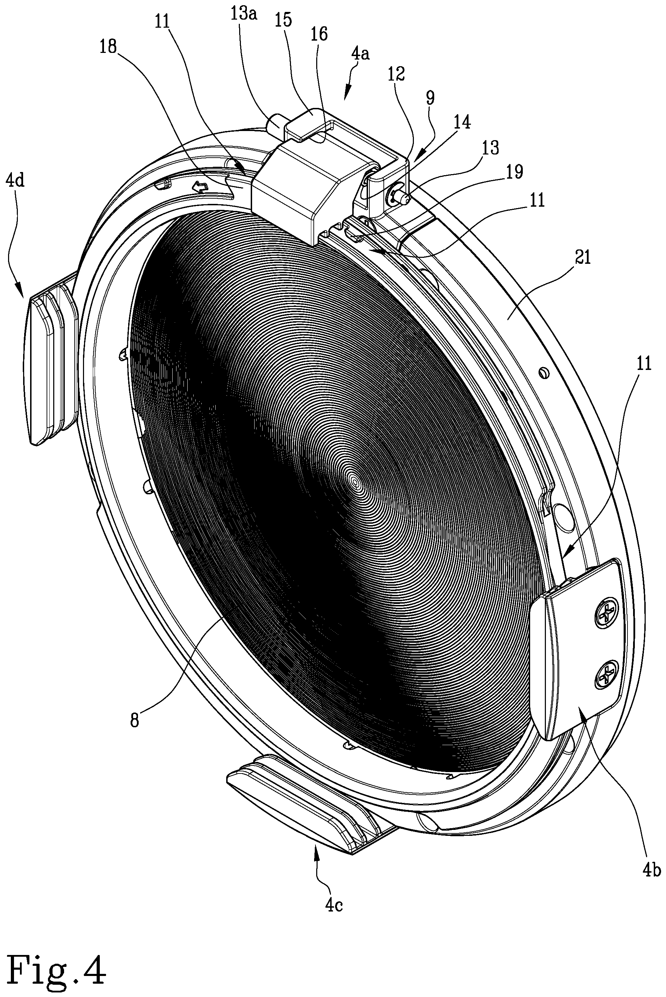

A control element 13a (pushbutton), outside the box-shaped support 12 and acting on the pin 13 to allow the translation of the pin 13 and the movable flange 4a along the box-shaped support 12, with relative compression of the elastic element 14, in such a way as to move the movable flange 4a from the first lowered operating position to the second raised operating position and vice versa (see Figures 3 and 4).

Returning to the mans 11 for positioning the annular body 7, these comprises a plurality of recesses 17 made on the edge 7a of the annular body 7 to allow the free passage towards the front glass 3 of the annular body 7 through the respective flanges 4b-4d positioned on the frame 1.

The positioning means 11 also comprise a pair of enlargements 18 and 19 made on a front surface of the edge 7a of the annular body 7 and positioned at a distance from each other in such a way as to form a limited space on the stable engagement edge 7a for the movable flange 4a following rotation of the annular body 7.

The enlargements 18 and 19 are configured to define a precise angle of rotation so as to move the relative recesses 17 of the edge 7a away from the channel 6 of each remaining flange 4b-4d and in such a way as to couple the edge 7a to the relative channel 6 of each remaining flange 4b-4d.

In light of this, the pair of enlargements 18 and 19, in use, being configured to prevent a counter-rotation of releasing of the annular body 7 due to a bilateral locking on the movable flange 4a in the lowered configuration.

The movable flange 4a can therefore be moved from the lowered position to the raised position by a pushing action from the outside of the button 13a which allows the pin 13 and the flange 4a associated with it to translate in a first direction in such a way as to move the flange 4a away from the bracket 15 and therefore be able to lift the flange 4a.

After lifting the flange 4a and releasing the pushbutton 13a, the spring 14 tends to compress the flange 4a, in a direction opposite to the first direction, against the bracket 14, stabilising it in the raised position.

At this point, the annular body 7 can be inserted through the fixed flanges 4b, 4c and 4d, thanks to the recesses 17 which allow it to pass freely until making contact with the channel 6 of the fixed flanges 4b, 4c, 4d.

Once this positioning has been performed, it is possible to rotate the annular body 7 by a certain angle in such a way as to couple the edge 7a of the annular body 7 in the zones of the respective channels 6 until positioning the two enlargements 18 and 19 beneath and on both sides of the movable flange 4a.

At this point, it is possible to return the movable flange 4a to the lowered position again through a pushing action from the outside of the pushbutton 13a which allows the pin 13 and the flange 4a associated with it to again translate in the first direction in such a way as to move the flange 4a away from the bracket 15 and therefore be able to lower the flange 4a and lock it again below the bracket 15 by means of the recess 16.

During the lowering of the movable flange 4a, its channel 6 couples (by clamping) with the underlying edge stretch 7a so as to define the definitive locking of the annular body 7 on all the flanges.

Thanks to the presence of the enlargements 18 and 19 positioned, in use, on both sides of the lowered flange 4a, the annular body 7a can no longer be rotated and is stably fixed to the projector 100.

It should be noted that at least three curved channels 6, 6a, 6b are made one after the other on each flange 4a-4d.

These additional channels 6a, 6b may be used to apply any further optical accessories superposed on the first lens, if necessary.

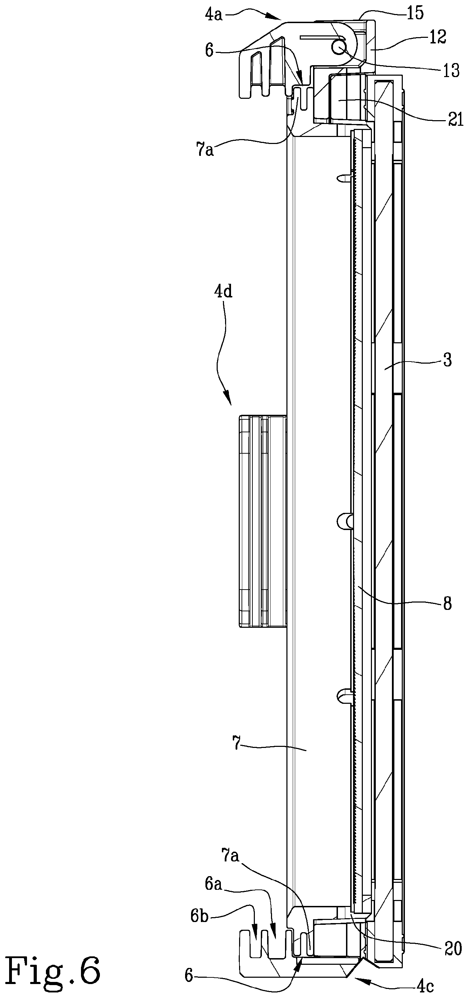

It should be noted that the annular body 7 is made of flexible material and comprises the edge 7a having a fork-shaped cross-section configured to allow a sliding locking by interference inside the channel 6 of each flange 4a-4d (see also Figure 6).

The annular body 7 also has an annular sleeve 20 for stably housing the first lens 8.

In light of this, the sleeve 20 is recessed relative to the edge 7a in such a way as to position, in use, the first lens 8 closer to the front glass 3 than the position of the edge 7a coupled to the flanges 4a-4d.

In other words, the first lens 8 is fitted according to the following steps:
- preparing the projector 100 with the flanges 4a-4d;
- preparing the first lens 8 in the annular body 7;
- moving the movable flange 4a of the projector 100 from a lowered position to a raised position;
- positioning the annular body 7 in such a way that the recesses 17 coincide with the fixed flanges 4b, 4c, 4d;
- moving the annular body 7 towards the front glass 3 of the projector 100 until the edge 7a coincides with the channel 6 of each flange;
- rotating the annular body 7 by a certain angle to couple stretches of the annular edge 7a with the channels 6 of the fixed flanges 4b-4d and cause a space of the edge 7a defined between the two enlargements 18-19 to coincide beneath the movable flange 4a;
- moving the movable flange 4a from the raised position to the lowered position with relative coupling by clamping of its channel with a stretch of the edge 7a.

Therefore, thanks to this structure of the projector, the preset aims are achieved and with significant advantages.

The lens is mounted quickly, precisely and without the need for tools.

Thanks to the combination of flanges and flexible annular body the positioning, centring and locking of the lens is immediate and precise without the need for further and successive adjustments.

The annular supporting body of the first lens is structured with a geometry configured to have the first lens in a recessed position relative to the anchoring point of the annular body on the frame of the projector.

In this way, the lens can "adhere" perfectly relative to the point of emission of the light, thus allowing the desired angle of opening to be obtained without loss of efficiency and avoiding the "spill light" phenomena.

Moreover, in the case of permanent installation of the projector, the first outer lens may be extracted easily and without tools from its annular body made of rubber and also housed inside the projector, behind the front glass, avoiding its deterioration and preserving the integrity of the lens.

## Claims

1. A projector of a light beam comprising at least:
- a projector body (1) having a first end (1a) and a second end (1b) to define a longitudinal axis of extension;
- a light source (2), positioned inside the projector body (1) close to the first end (1a) and configured for emitting a light beam along a direction of emission (F) and in a direction of emission which goes from the first end (1a) to the second end (1b) of the projector body (1);
- a front covering glass (3) for the outlet of the light beam positioned at the second end (1b) of the projector body (1);
**characterised in that** it comprises:
- a plurality of flanges (4a-4d), of which at least one movable flange (4a), associated with the annular edge (5) of the second end (1b) of the projector body (1); each flange (4a-4d) protruding parallel to the direction (F) of emission of the light beam; each flange (4a-4d) being provided with at least one curved channel (6) formed on its inner surface;
- an annular body (7) for housing a first lens (8) configured for modifying the projection of the light beam; the annular body (7) having an edge (7a) configured for housing, in use, inside the relative channel (6) present on each flange (4a-4d);
- means (9) for quick, reversible locking of the annular body (7) on the flanges (4a-4d) positioned on at least one movable flange (4a) and configured for stably positioning the first lens (7) close to the front glass (3) in a position centred relative to the direction (F) of the light beam.

2. The projector according to claim 1, comprising a second lens (10) configured for modifying the projection of the light beam housed inside the projector body (1), between the light source (2) and the front glass (3) and positioned in a position centred relative to the direction (F) of the light beam.

3. The projector according to claim 1 or 2, wherein the edge (7a) of the annular body (7) is equipped with means (11) for relative positioning with the flanges (4a-4d) and configured for forming a constrained space for at least the movable flange (4a), by a rotation of the annular body (7) and after a free positioning, towards the front glass (3), of the annular edge (7a) to the channel (6) of each remaining flange (4b-4d).

4. The projector according to any one of the preceding claims, wherein the quick, reversible locking means (9) comprise a box-shaped support (12) associated with the frame (1) of the projector and having a pin (13) partly housed inside the support (12) on which is articulated the movable flange (4a) in such a way as to rotate between a first lowered operating position for locking the movable flange (4a) on the annular body (7), wherein the movable flange (4a) is positioned parallel to the direction (F) of the light beam, and a second raised operating position of the movable flange (4a) for the free passage of the annular body (7), wherein the movable flange (4a) is positioned transversally to the direction (F) of the light beam.

5. The projector according to claim 4, wherein the quick, reversible locking means (9) comprise an elastic element (14) fitted on the pin (13), retained between an inner wall of the support (12) and a surface of the movable flange (4a), and configured to allow the movable flange (4a) to be kept in the first lowered operating position or in the second raised operating position; a control element (13a), outside the box-shaped support (12) and acting on the pin (13) to allow the translation of the movable pin (13) and of the movable flange (4a), with relative compression of the elastic element (14), in such a way as to move the movable flange (4a) from the first lowered operating position to the second raised operating position and vice versa.

6. The projector according claim 4 or 5, wherein the box-shaped support (12) is provided with a horizontal bracket (16) for contact with a recess (16) made on a surface of the movable flange (4a) and configured to keep the movable flange (4a) in the first lowered operating position.

7. The projector according to any one of claims 3 to 6, wherein the positioning means (11) of the annular body (7) comprise:
- a plurality of recesses (17) made on the edge (7a) of the annular body (7) to allow the free passage towards the front glass (3) of the annular body (7) through the respective flanges (4b-4d) positioned on the frame (1);
- a pair of enlargements (18, 19) made on a front surface of the edge (7a) of the annular body (7) and positioned at a distance from each other in such a way as to define a limited space on the edge (7a) for stable engagement of the movable flange (4a) following the rotation of the annular body (7) and configured to define a precise angle of rotation so as to move the relative recesses (17) of the edge (7a) away from the channel (6) of each remaining flange (4b-4d) and in such a way as to couple the edge (7a) to the relative channel (6) of each remaining flange (4b-4d); the pair of enlargements (18, 19), in use, being configured to prevent a counter-rotation of disengagement of the annular body (7) due to a bilateral locking on the movable flange (4a).

8. The projector according to any one of the preceding claims, wherein on each flange (4a-4d) at least three curved channels (6, 6a, 6b) are made one after the other.

9. The projector according to any one of the preceding claims, wherein the annular body (7) is made of flexible material and comprises the edge (7a) having a fork-shaped cross-section configured to allow a sliding locking by interference inside the channel (6) of each flange (4a-4d).

10. The projector according to any one of the preceding claims, wherein the annular body (7) has an annular sleeve (20) for stably housing the first lens (8); the sleeve (20) being recessed relative to the edge (7a) in such a way as to position, in use, the first lens (8) closer to the front glass (3) than the position of the edge (7a) coupled with the flanges (4a-4d).
